# EUROPEAN PATENT APPLICATION

(11) **EP 0 990 382 A1**
(43) Date of publication of application: **05.04.2000**
(21) Application number: 99306929.3
(22) Date of filing: 31.08.1999
(51) Int. Cl.: A01D 43/00, A01D 43/10

(54) **Harvesting method and apparatus for use in silage productions**

(30) Priority: 04.09.1998 GB 9819281
(71) Applicant: KVERNELAND TAARUP A/S, 5300 Kerteminde (DK)
(72) Inventor: Busk, Per, 5800 Nyborg (DK); Lingvall, Per, S-74030 Bjoerklinge (SE)
(74) Representative: Orr, William McLean

(57) **Abstract**

Method and apparatus for harvesting a standing crop for use in silage production and in which the apparatus comprises means (6, 2, 3) for cutting the crop (7) and depositing the cut crop on the ground so as to undergo partial drying to a dry matter proportion which is suitable for subsequent silage production; means for picking-up the partly-dried crop so that it can undergo subsequent silage production; and means for spraying an additive onto the crop after it has been cut and before silage production commences, such additive being of such a type that it enhances the production of good quality silage during the subsequent silage production stage.

## Description

This invention relates to a harvesting method and apparatus for use in silage production.

As is well known, silage is produced as a result of a fermentation reaction in conditions in which ambient air is excluded, and which provides a nutritious animal feed which is particularly suitable for feeding to dairy herds in order to enhance milk yields.

Silage is produced using a suitable standing crop as a starting material e.g. grass or LUCERNE, or a stalky material plus ears of corn (such as maize) when "whole crop ensilage" is contemplated.

The standing crop is cut (usually by a mower) and is deposited on the ground to undergo partial drying (wilting) before it is subsequently picked-up. When ensilage in a silage clamp or tower is involved the partly-dried crop is transported in loose form to the clamp or tower, and is then compressed before being covered so as to exclude atmospheric air from contact, and to allow fermentation of the crop to proceed to form silage.

Alternatively, the cut crop lying on the ground can be picked-up by a baler and then be wrapped by stretch-film wrapping to form "big bales" in which atmospheric air is excluded so that silage production can take place within the wrapped bale. This method of silage production has increased in popularity because a) the capital cost of silage towers is avoided and b) the disposal of silage effluent produced in silage towers and clamps is rendered unnecessary.

The chemical reactions which take place during silage production are complex, and are variable according to conditions, but it is generally recognised that compression of the harvested crop to the maximum extent possible is highly desirable in order to exclude as much air as possible, followed by prevention of ambient air and rain water from coming into contact with the compressed mass while fermentation proceeds.

In a compressed mass in which silage production is taking place, there are both benign and also undesirable organisms which are present, and clearly from the point of view of production of good quality silage, the effects of the benign organisms should be enhanced as far as possible while the effect of the undesirable organisms should be minimised.

On of the benign influences comprises so-called "lactic acid bacteria" (LAB), which is always present in a harvested crop, and which plays an important part in the fermentation process to produce good quality silage.

The present invention has evolved from a recognition hat the possible application of LAB (or other suitable additive) in a controlled manner during the harvesting of a standing crop (and prior to ensilage) can result in improved quality of silage productions.

According to one aspect of the invention there is provided a method of harvesting a standing crop for use in silage production which comprises:
cutting the crop and depositing the cut crop on the ground so as to undergo partial drying to a dry matter proportion which is suitable for subsequent silage production;
picking-up the partly-dried crop; and
treating the picked-up crop in such a way that silage production can take place:
in which an additive is applied to the crop after it has been cut and before silage production commences, said additive being of such a type that it enhances the production of good quality silage during the subsequent silage production stage.

Any suitable additive may be applied, during the harvesting method, but a particularly effective additive is lactic acid bacteria (LAB), which is a material already present in the cut crop material.

The use of mower/conditioners is well known in the harvesting of a standing crop for silage production, and in a particularly preferred development of a harvesting method according to the invention, a mower/conditioner is used to harvest the standing crop and which is operative to spray the additive onto the cut crop prior to or during the "conditioning" of the crop by the usual conditioning rotor or rotors. As is well known, a conditioning rotor exerts a working action on the cut crop in order to "bruise" the surface of the stem of the crop, which allows internal moisture in the stem to escape and evaporate during the subsequent drying stage.

The application of the additive to the cut crop prior to or during the treatment by the conditioning rotor ensures thorough mixing of the additive with the crop and which has been found to give improved quality of silage production and better milk yield from dairy herds fed with the silage.

The final stage of silage production can take place using any suitable one of existing technique e.g. in a silage tower or clamp or formation of the partly-dried crop into compressed bales which are subsequently wrapped with stretch film wrapping.

According to a further aspect of the invention, there is provided an apparatus for harvesting a standing crop to produce silage, said apparatus comprising:
means for cutting the crop and depositing the cut crop on the ground so as to undergo partial drying to a dry matter proportion which is suitable for subsequent silage production;
means for picking-up the partly-dried crop so that it can undergo subsequent silage production; and
means for spraying an additive onto the crop after it has been cut and before silage production commences, said additive being of such a type that it enhances the production of good quality silage during the subsequent silage production stage.

Preferably, the additive is lactic acid bacteria.

In a preferred embodiment of the harvesting apparatus, it is formed by a mower conditioner having a cutter bar to cut the standing crop, at least one conditioner rotor which applies a working action to the cut crop before depositing the crop on the ground for subsequent drying, and a spraying device mounted on the mower/conditioner to apply the additive to the crop prior to and/or during treatment of the cut crop by the conditioner rotor.

Preferred embodiments of harvesting method and apparatus according to the invention will now be described in detail, by way of example only, with reference to the accompanying drawings, in which:-
Figure 1 is a side view of a first embodiment, in the form of a mower/conditioner, to which the invention may be applied.
Figure 2 is a similar view of a second embodiment; and
Figure 3 is a side view in more detail of a practical embodiment of the invention.

Referring now to the drawings, there will be described embodiments of harvesting methods and apparatus according to the invention and taking the form of mower/conditioners. However, although these are currently preferred examples it should be understood that the invention can be applied to other examples e.g. the use of a separate mower and conditioner, provided only that the additive (preferably LAB) is sprayed onto the cut crop before it is returned to the ground for drying purposes.

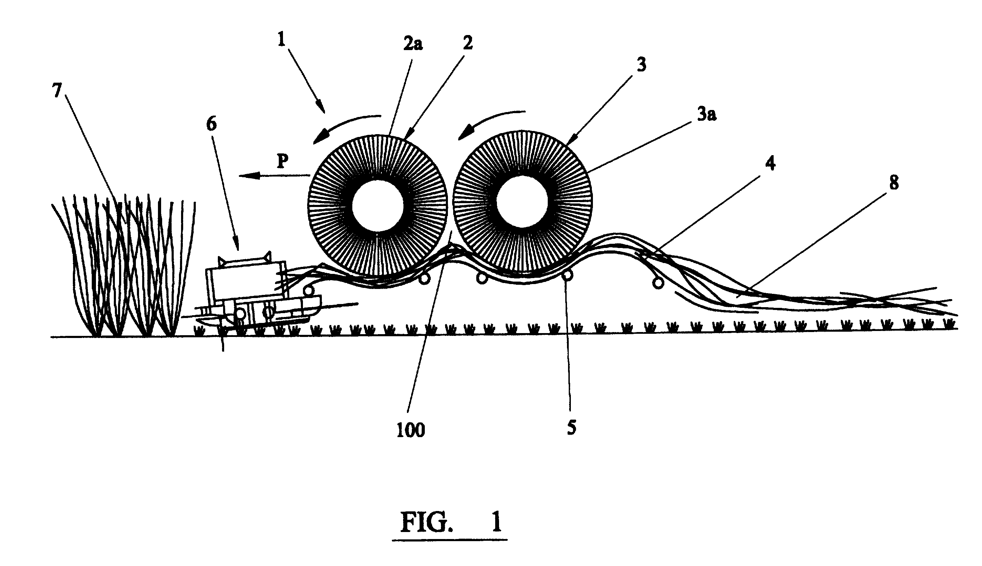

In Figure 1 there is shown a mower/conditioner 1 having a cutter bar 6 and a following pair of conditioner rotors 2, 3 which cut a standing crop 7, when moving in the direction P, and then apply a conditioning action to the cut crop via the conditioning rotors 2, 3 in co-operation with a guide plate 4 which is reinforced with transverse bars 5.

The conditioned crop is then deposited on the ground as shown by reference 8, for subsequent drying to "wilt" until a required dry matter proportion is reached for subsequent silage production. The partly-dried crop is then picked-up prior to subsequent silage production e.g. in a silage tower or clamp, or by use of a baler and wrapper to form tightly wrapped bales.

In the example of Figure 1, the rotors 2, 3 both rotate anti-clockwise, and the guide plate 4 is arranged below the rotors so as to form an aggressive working zone 100 between the two rotors.

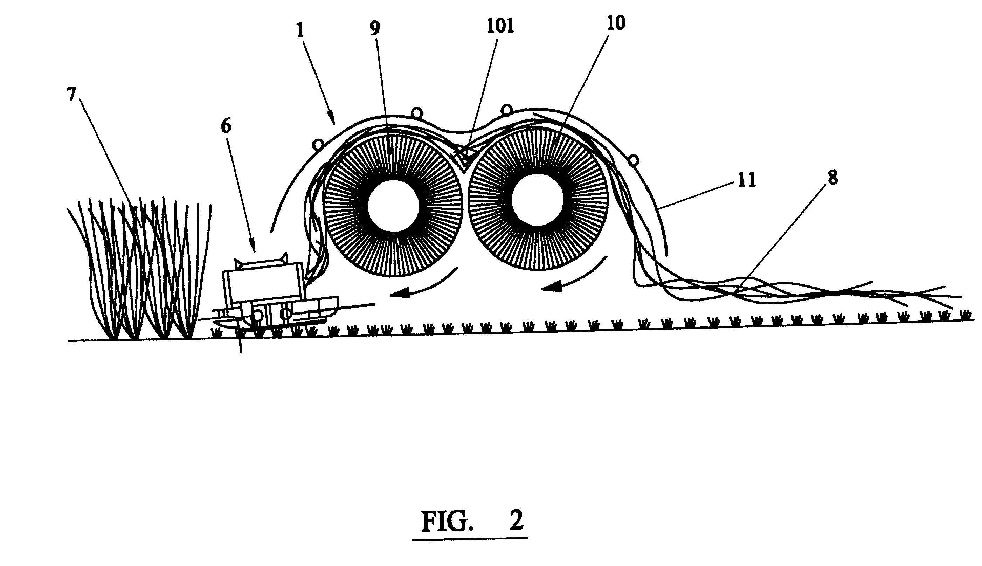

In the example of Figure 2, rotors 9 and 10 rotate clockwise, and a guide plate 11 extends above the rotors to form an aggressive working zone 101.

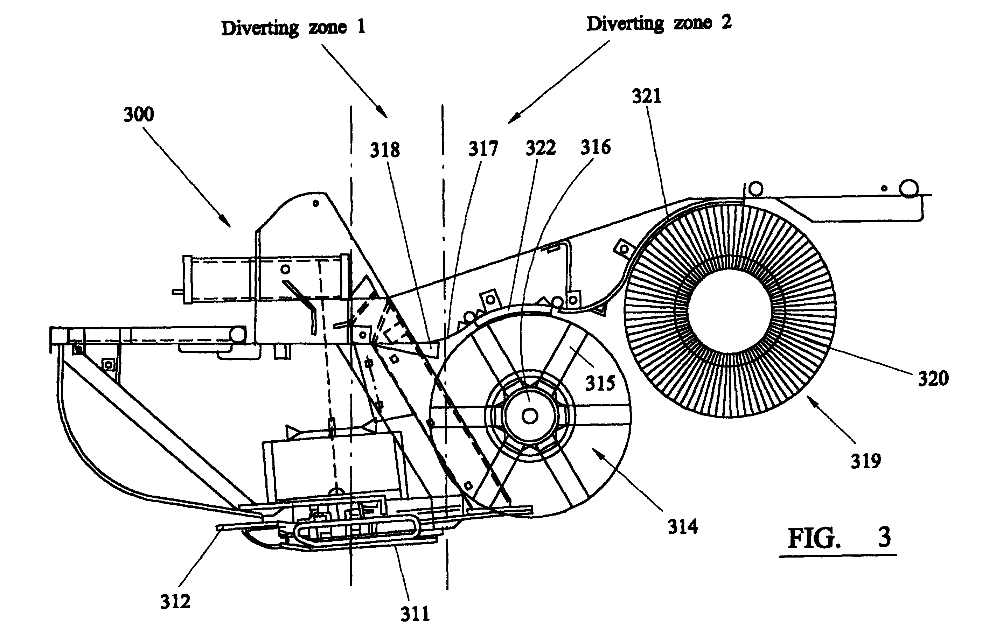

In the example of Figure 3, rotors 314 and 319 cooperate with an undulating guide plate 322 to condition the crop after it has been cut by cutter bar 311, 312 (which may comprise a series of mower discs known per se).

In all of the embodiments of the invention, means is provided to spray a silage promoting additive (preferably LAB) onto the cut crop and before it is returned to the ground for drying purposes.

More preferably, a spraying head is mounted on the guide plate so that the additive is applied prior to, and/or during conditioning treatment of the cut crop by the working elements of the rotors. This ensures thorough mixing of the additive with the cut crop before the crop is deposited on the ground for subsequent drying, and then ensilage.

## Claims

1. A method of harvesting a standing crop for use in silage production which comprises:
cutting the crop and depositing the cut crop on the ground so as to undergo partial drying to a dry matter proportion which is suitable for subsequent silage production;
picking-up the partly-dried crop; and
treating the picked-up crop in such a way that silage production can take place:
in which an additive is applied to the crop after it has been cut and before silage production commences, said additive being of such a type that it enhances the production of good quality silage during the subsequent silage production stage.

2. A method according to claim 1, in which the additive comprises lactic acid bacteria.

3. A method according to claim 1 or 2, in which the standing crop is cut and then conditioned using a mower/conditioner.

4. A method according to claim 3, in which the additive is sprayed on the cut crop prior to, and/or during conditioning treatment of the cut crop.

5. A method according to any one of claims 1 to 4, in which subsequent production of silage takes place in a silage tower, a silage clamp, or in wrapped bales.

6. An apparatus for harvesting a standing crop to produce silage, said apparatus comprising:
means for cutting the crop and depositing the cut crop on the ground so as to undergo partial drying to a dry matter proportion which is suitable for subsequent silage production;
means for picking-up the partly-dried crop so that it can undergo subsequent silage production; and
means for spraying an additive onto the crop after it has been cut and before silage production commences, said additive being of such a type that it enhances the production of good quality silage during the subsequent silage production stage.

7. Apparatus according to claim 6, and in the form of a combined mower/conditioner.

8. Apparatus according to claim 7, in which a spraying head is mounted on the mower/conditioner to apply the additive to the crop prior to, and/or during treatment of the cut crop by conditioning rotor.

9. Apparatus according to claim 8, in which the spraying head is mounted on a guide plate which co-operates with at least one conditioning rotor.
